(19) 

Europäisches Patentamt
European Patent Office
Office européen des brevets

(11) **EP 3 988 421 B1**

(12) **EUROPEAN PATENT SPECIFICATION**

(45) Date of publication and mention
of the grant of the patent:
**03.09.2025 Bulletin 2025/36**

(21) Application number: **20825973.9**

(22) Date of filing: **18.05.2020**

(51) International Patent Classification (IPC):
**B61F 7/00** *(2006.01)*    **B60B 35/10** *(2006.01)*

(52) Cooperative Patent Classification (CPC):
**B61F 7/00; B60B 17/00; B60B 35/1045;
B60B 35/1081;** B60B 2900/351

(86) International application number:
**PCT/CN2020/090807**

(87) International publication number:
**WO 2020/253436 (24.12.2020 Gazette 2020/52)**

(54) **CHANGEABLE-GAUGE WHEEL SET COMPRISING A WHEEL AND A MOVABLE DISC ASSEMBLY**

BEWEGLICHE SCHEIBENANORDNUNG FÜR EINEN RADSATZ MIT VERÄNDERLICHER SPURWEITE UMFASSEND EIN RAD UND EINE BEWEGLICHE SCHEIBENANORDNUNG

TRAIN DE ROUES À CALIBRE VARIABLE COMPRENANT UNE ROUE ET UN ENSEMBLE DISQUE MOBILE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **21.06.2019 CN 201910541242**

(43) Date of publication of application:
**27.04.2022 Bulletin 2022/17**

(73) Proprietor: CRRC Qingdao Sifang Co., Ltd.
**Qingdao, Shandong 266111 (CN)**

(72) Inventors:
• **CAO, Hongyong**
  **Qingdao, Shandong 266111 (CN)**
• **WANG, Xu**
  **Qingdao, Shandong 266111 (CN)**
• **LIN, Lin**
  **Qingdao, Shandong 266111 (CN)**
• **CAO, Xiaoning**
  **Qingdao, Shandong 266111 (CN)**
• **KUAI, Rongsheng**
  **Qingdao, Shandong 266111 (CN)**

(74) Representative: **Dilg, Haeusler, Schindelmann
Patentanwaltsgesellschaft mbH
Leonrodstraße 58
80636 München (DE)**

(56) References cited:
EP-A1- 0 031 757         EP-A1- 1 065 125
CN-A- 107 697 094        CN-A- 108 791 352
CN-A- 108 909 355        CN-A- 108 909 360
CN-A- 110 228 492        CN-A- 110 228 493
CN-A- 110 228 494        CN-A- 110 228 495
CN-A- 110 228 496        CN-A- 110 228 497
CN-A- 110 228 498        CN-A- 110 228 499
CN-Y- 2 753 635          JP-A- 2001 270 439
JP-A- 2007 314 133       JP-A- 2007 314 134
JP-B2- 4 918 507         US-A- 4 512 729
US-A1- 2016 195 071

## Description

### FIELD OF TECHNOLOGY

The present application relates to the technical field of rail vehicle for variable gauge, in particular to a gauge-changing wheelset comprising a wheel and a movable disk assembly.

### BACKGROUND

In order to meet the transportation requirements between tracks with different gauges in neighboring countries, generally, bogies with different wheelset inner pitch are generally replaced at a border between countries, but such solution is costly and time-consuming. Bogies for variable gauge have been invented in Spain and then in Japan to enable continuous running of trains on tracks with different gauges.

However, traditional structures for variable gauge are all passive, and operations for changing variable gauge of the wheels need to be performed with an external auxiliary facility, which causes low efficiency.

CN 107 697 094 A discloses a locking part applied to a variable gauge bogie, comprising a locking rod and a locking block. The locking block is located in an axle box and connected to an upper part of the locking rod. The locking rod is slidably connected with the axle box, and a lower part protrudes out of the axle box.

### BRIEF SUMMARY

(1) Technical problems to be solved

The present invention is intended to address at least one of the technical problems existing in the prior art or related art.

The present invention is defined by the independent claim. Advantageous embodiments are described in the dependent claims, the following description and the drawings. An embodiment of the present invention inter alia provides a gauge-changing wheelset so as to solve the problems that traditional structures for variable gauge are all passive, and operations for changing gauge of the wheels need to be performed with external auxiliary facilities, which causes low efficiency

(2) Technical solutions

In order to solve the above technical problems, an embodiment of the present invention provides a gauge-changing wheelset comprising a wheel and a movable disk assembly, the movable disk assembly comprising:

a movable disk having a central through hole and connecting holes located outside of the central through hole; and

a bearing having an outer ring fastened in the central through hole and an inner ring fixed around an outer hub of a wheel.

Each connecting hole has a rubber node therein, the lateral drive mechanism comprises an electric cylinder having an extension end provided with a positioning lug boss and an external thread; the extension end penetrates through the rubber node and the positioning lug boss abuts against an end surface of the connecting hole, and a nut is screwed on the external thread to be abutted against another end surface of the connecting hole

According to present invention, the movable disk has two symmetrical connecting holes with respect to the central through hole

In an embodiment of the present invention, the movable disk is in a similar rhombus shape, and top corners of the similar rhombus shape are constructed as arcs that are transitionally connected to adjacent sides, and the two connecting holes are respectively provided at a pair of top corners on the movable disk opposite to each other.

In an embodiment of the present invention, the bearing is a four-point angular contact ball bearing.

In an embodiment of the present invention, a movable disk retaining ring is provided on a side of the movable disk close to the wheel; and a bearing outer retaining ring and a bearing inner retaining ring are respectively provided on a side of the movable disk distal to the wheel.

In an embodiment of the present invention, the movable disk retaining ring and the bearing outer retaining ring are both connected to the movable disk by a bolt and a nut; and the bearing inner retaining ring is fixed on the outer hub of the wheel by a screw.

In an embodiment of the present invention, a gap is provided between the bearing inner retaining ring and the bearing outer retaining ring.

In an embodiment of the present invention, the rubber node has a thickness less than or equal to an axial length of each connecting hole.

Beneficial effects

Compared with the prior art, the present invention has at least the following advantages.

The gauge-changing wheelset according to the present invention has a simple structure, which may be fastened to the wheel and occupy a small space of the wheel. Based on the bearing, the movable disk can remain stationary when the wheel rotates. The overall transmission torque is large and reliability may be improved.

In addition, the movable disk is pushed or pulled by the lateral drive mechanism to drive the wheels for lateral movement, which can stabilize the lateral movement of the wheels, decrease the wear between the wheel axles, and improve the reliability of the gauge-changing wheelset. Further, a ground apparatus for variable gauge becomes relative simple, and the reliability of changing gauge and efficiency of changing gauge may be improved since signals for variable gauge are output by a vehicle control system.

## BRIEF DESCRIPTION OF THE DRAWINGS

FIG. 1 is a three-dimensional schematic diagram of a movable disk assembly according to an embodiment of the present invention;

FIG. 2 is an axial cross-sectional view of a movable disk assembly according to an embodiment of the present invention;

FIG. 3 is a schematic diagram of a combination of the movable disk assembly and the wheel according to an embodiment of the present invention;

FIG. 4 is a three-dimensional schematic diagram showing an outer hub of the wheel according to an embodiment of the present invention;

FIG. 5 is a three-dimensional schematic diagram showing an inner hub of the wheel according to the embodiment of the present invention;

FIG. 6 is a three-dimensional schematic diagram of a gauge-changing wheelset according to an embodiment of the present invention;

FIG. 7 is an axial cross-sectional schematic diagram showing a lateral drive mechanism of a gauge-changing wheelset according to an embodiment of the present invention;

FIG. 8 is an axial cross-sectional schematic diagram showing a locking mechanism of a gauge-changing wheelset according to an embodiment of the present invention;

FIG. 9 is a partial enlarged view of a portion "A" in FIG. 8;

FIG. 10 is a structural schematic diagram of a traction electromagnet in a locking mechanism according to an embodiment of the present invention;

FIG. 11 is a three-dimensional schematic diagram of a dust cover according to an embodiment of the present invention;

FIG. 12 is a three-dimensional schematic diagram of a dust cover according to an embodiment of the present invention viewed from another angle;

Reference numeral: 1 lateral drive mechanism; 11 electric cylinder; 12 nut; 2 brake disc; 3: locking mechanism; 31 sleeve; 32 traction electromagnet; 32-1 traction coil; 32-2 movable core; 33 locking pin; 34 chuck coil; 35 lock pin; 4: wheel; 41: locking hole; 42: threaded hole; 43: screw; 5: axle; 6: dust cover; 61: electric brush; 62: chip; 63 insulating rubber; 64 hanger; 7 axle box body; 8 movable disk; 81 movable disk retaining ring; 82 connecting hole; 9 four-point angular contact ball bearing; 91 bearing inner retaining ring; 92 bearing outer retaining ring; 10 bolt.

## DETAILED DESCRIPTION

The specific embodiments of the present invention are further described in detail below with reference to the drawings and embodiments.

In the description of the present invention, it is to be noted that the orientation or positional relationships indicated by terms such as "center", "longitudinal", "lateral", "upper", "lower", "front", "rear", "left", "right", "vertical", "horizontal", "top", "bottom", "inside", "outside", etc. are based on the orientation or positional relationship shown in the drawings, and are merely for the convenience of describing the present invention and simplifying the description, rather than indicating or implying that the device or component stated must have a particular orientation, is constructed and operated in a particular orientation, and thus is not to be construed as limiting the invention.

In the description of the present invention, it is to be noted that unless explicitly stated and defined otherwise, the terms "installed/mounted", "connected with," and "connected" shall be understood broadly, for example, it may be either fixedly connected or detachably connected, or can be integrated; it may be mechanically connected, or electrically connected; it may be directly connected, or indirectly connected through an intermediate medium and the communication between the interior of two elements. The specific meanings of the terms above in the present invention can be understood by a person skilled in the art in accordance with specific conditions.

Further, in the description of the present invention, "multiple", "a plurality of", and "multiple groups" mean two or more unless otherwise specified.

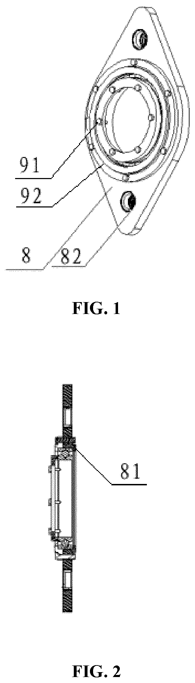

As shown in FIGS. 1 to 3, an embodiment of the present invention provides a gauge-changing wheelset, which includes: a movable disk 8 having a central through hole and a connecting hole 82 located outside of the central through hole;

a bearing having an outer ring fastened in the central through hole, that is, the outer ring of the bearing being in interference fit with the central through hole, and an inner ring fixed around an outer hub of a wheel, in other words, the inner ring of the bearing being in interference fit with the outer hub of the wheel to ensure that the moving disk 8 remains relatively stationary when an axle 5 rotates.

It should be noted that, since the bearing here needs to bear large bidirectional axial force, but basically does not bear radial force, the four-point angular contact ball bearing 9 is preferably used.

In order to reach a train speed of 400km/h, the limiting rotating speed of the

$$4 \times 10^8$$

four-point angular contact ball bearing 9 should not be less than $60\Pi D$ (r/min), where D is the diameter of each wheel 4 (unit: mm). A (axial) width of the four-point angular contact ball bearing 9 should be about 45mm, and a (radial) thickness thereof should be as small as possible under the premise of meeting the requirements. The four-point angular contact ball bearing 9 does not have an axial internal clearance. In addition, the four-point angular contact ball bearing 9 mainly bears two-way axial forces, so two-way retaining rings should be provided at the inner and outer sides.

In order to ensure the force balance of each wheel 4, the movable disk 8 is provided with two connecting holes 82 symmetrically with respect to the central through hole, and the connecting holes 82 are configured to connect a lateral drive mechanism 1 which drives the wheel to move. Each of the lateral drive mechanisms 1 includes two electric cylinders 11 fixed in parallel on the axle box body 7. The two electric cylinders 11 are separately provided on both sides of the hub of the wheels 4, and each electric cylinder 11 has an extension end penetrating through the connecting holes, the extension end of the electric cylinder 11 is fixedly connected to the connecting hole 82 by a fastener, so that when the extension end of the electric cylinder 11 moves, it may drive the wheels 4 to move synchronously.

Further, by providing the two connecting holes 82 symmetrically with respect to the center of the central through hole of the movable disk 8, i.e., by ensuring that the force applied to the disc of each wheel 4 is equal on both sides, balanced force of each wheel 4 can be achieved.

In order to avoid an adverse affection of vibration for the electric cylinder 11, the connecting holes 82 are provided with a rubber node, that is, a rubber axle sleeve, which has a thickness less than or equal to an axial length of the connecting holes 82. That is, the rubber node cannot protrude beyond the connecting hole 82, so as not to affect the operating accuracy of the electric cylinder 11 in a lateral direction. The extension end of each electric cylinder 11 is provided with a positioning lug boss and an external thread; the extension end penetrates through the rubber node and the positioning lug boss abuts against one end surface of connecting hole 82, and a nut 12 is screwed on the external thread so that the nut 12 abuts against the other end surface of connecting hole 82 so that the two can be connected firmly to ensure that after the extension end of the electric cylinder 11 is connected with the connecting hole 82, there is no relative displacement between the electric cylinder 11 and the movable disk 8 and thus the wheels 4 move accurately.

When the gauge changes from wide to narrow, the electric cylinder 11 pushes the movable disk 8 to move away from the axle box body 7, and the movable disk 8 drives the wheels 4 to move at the same time, such that a changing from a wide gauge into a narrow gauge can be achieved.

When the gauge changes from narrow to wide, the electric cylinder 11 pulls the movable disk 8 to move towards the axle box body 7, and the movable disk 8 drives the wheels 4 to move at the same time, such that a changing from a narrow gauge into a wide gauge can be achieved.

In an embodiment of the present invention, in order to reduce the weight of the movable disk 8, the movable disk 8 is in a similar rhombus shape, and top corners of the similar rhombus shape are constructed as arcs that are transitionally connected to adjacent sides, so as to avoid forming sharp corners which would decrease the safe usage, and avoid concentrating stress at the corners.

The two connecting holes are respectively provided in a pair of top corners on the movable disk opposite to each other. Since no connecting holes are provided in the other pair of top corners, the other pair of top corners may be configured as arc surfaces matching the outer circumference of the central through hole of the movable disk 8 so as to further reduce the weight of the movable disk 8 and save materials and installation space of the movable disk 8, thereby leaving space for the installation of other components.

In an embodiment of the present invention, as shown in FIG. 2, a movable disk retaining ring 81 is provided on a side of the movable disk 8 close to the wheel; the movable disk retaining ring 81 is formed by a circular protrusion extending from the movable disk 8 into the central through hole. When the bearing is installed, the bearing outer retaining ring close to the wheel is shielded by the movable disk retaining ring 81, and the bearing inner retaining ring close to the wheel is shielded by the lug boss formed on the hub of the wheel. A bearing outer retaining ring and a bearing inner retaining ring are respectively provided on a side of the movable disk away from the wheel to seal the inner and outer sides of the bearing to seal the inside and outside of the bearing so as to prevent debris and dust from entering the bearing, which will affect the accuracy and service life of the bearing.

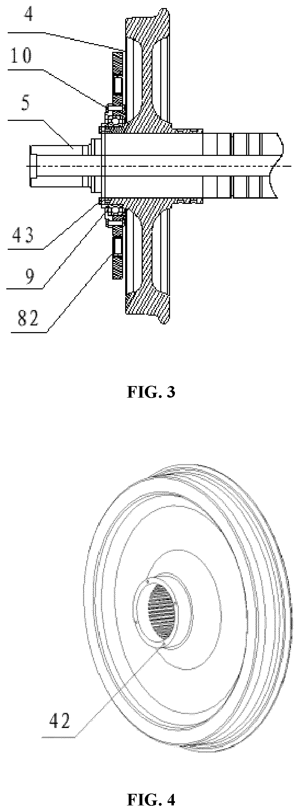

In an embodiment of the present invention, as shown in FIGS. 1 to 3, specifically, both the movable disk retaining ring 81 and the bearing outer retaining ring 92 may pass through the movable disk retaining ring 81 and the movable disk 8 using bolts 10 and through the bearing outer retaining ring 92 and the moving disk 8 using bolts 10 such that both the movable disk retaining ring 81 and the bearing outer retaining ring 92 are tightly connected with the moving disk 8 by screwing nuts. The bearing inner retaining ring 91 may be fixed on the outer hub of the wheel by screws 43, as shown in FIG. 4, a plurality of threaded holes 42 may be provided on the end surface of the outer hub of the wheel, and the screws 43 may pass through the bearing inner retaining ring 91 to connect with the threaded holes 42 one by one. In such way, the bearing inner retaining ring 91 can be fixed on the wheel.

In an embodiment of the present invention, as shown in FIG. 1, in order to avoid interference with the bearing outer retaining ring when the bearing inner retaining ring rotates, a gap is provided between the bearing inner retaining ring 91 and the bearing outer retaining ring 92.

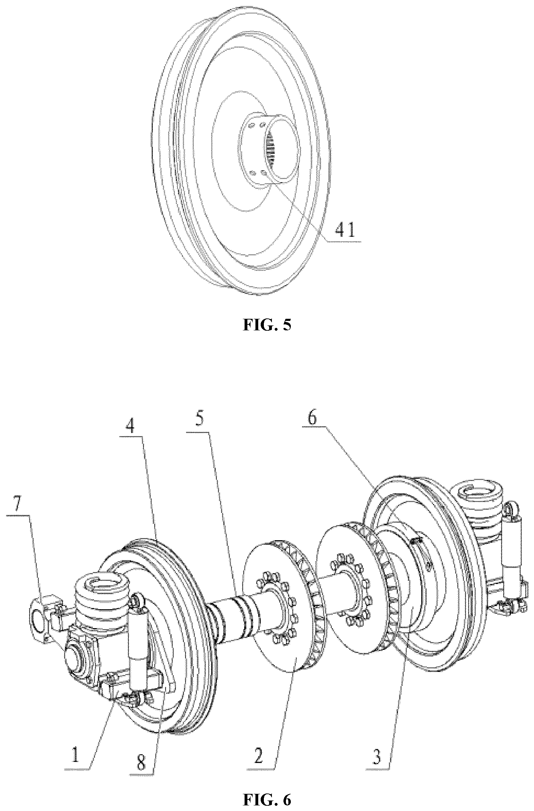

In the embodiment of the present invention, as shown in FIG. 6, the gauge-changing wheelset includes wheels 4 and an axle 5. The wheels 4 are provided at both ends of the axle 5 and are connected to the axle 5 through splines. Specifically, an inner circumference of each wheel 4 is provided with internal splines, the axle 5 is provided with external splines, and each wheel 4 and the axle 5 are in fit connection with the internal splines and external splines to evenly distribute the torque on the inner circumference of each wheel 4, which not only facilitates torque transmission, but also facilitates the sliding of each wheel 4 along the axle 7 for changing gauge. Both ends of the axle 5 located outside of each wheel 4 are respectively supported in the axle box body 7 which can provide support force for the wheelset. In the present embodiment, the hub of each wheel 4 extends to the outer side of each wheel 4 and to the inner side of each wheel 4, respectively, to form an outer hub and an inner hub to facilitate the installation of the matching components.

A pair of brake discs 2 are also provided on the axle 5 between the two wheels 4 and used to cooperate with the brake caliper on the bogie for decelerating or braking the train.

As shown in FIGS. 6-12, the gauge-changing wheelset according to the present embodiment further includes:

a lateral drive mechanism 1 and the movable disk assembly for the gauge-changing wheelset as described in the above technical solution, the movable disk 8 is tightly fixed around the outer hub of each wheel 4 through the bearing, and the lateral drive mechanism 1 is provided on the outer side of the movable disk 8; the movable disk 8 is pushed or pulled by the lateral drive mechanism 1 to drive each wheel 4 for movement, thereby changing the gauge for wheels 4. In the present invention, the movable disk 8 is pushed or pulled by the lateral drive mechanism 1 to achieve the lateral movement of the wheels 4, so that the wheels 4 can move laterally more stable, the wear between the wheel and the axle may be decreased, and the reliability of the gauge-changing wheelset is improved.

The gauge-changing wheelset according to the present embodiment further includes: a locking mechanism 3 respectively provided on the inner side of each of the wheels 4.

Specifically, the locking mechanism 3 includes a traction electromagnet 32. The traction electromagnet 32 includes a traction coil 32-1 and a movable core 32-2 driven by the traction coil 32-1. As shown in FIG. 5, the inner hub of each wheel 4 is provided with a plurality of locking holes 41 at intervals in the axial direction. The traction coil 32-1 has a fixed position, and the movable core 32-2 is directed to the position where one of the locking holes 41 is located. Further, the axis of the movable core 32-2 is coaxially arranged with the axes of the locking holes 41 and the movable core 32-2 may insert into or remove from the corresponding locking hole 41. Specifically, when the vehicle is running normally, the movable core 32-2 is located in the locking hole 41 corresponding to a gauge, and the movable core 32-2 and the locking hole 41 are locked to each other. When the gauge needs to be changed, each wheel 4 needs to be unlocked firstly. At this time, the traction coil 32-1 is powered on, and the movable core 32-2 is moved closer to the traction coil 32-1 under the magnetic field force of the traction coil 32-1, and the movable core 32-2 is retracted and exit from the locking hole 41 to be unlocked.

The lateral drive mechanism 1 is fixed on the axle box body 7. The lateral drive mechanism 1 includes an electric cylinder 11, and the protruding end of the electric cylinder 11 is used to push or pull the unlocked wheels 4 to change the gauge for the wheels 4. After the gauge is changed, the traction coil 32-1 is powered off, the magnetic field force of the traction coil 32-1 on the movable core 32-2 disappears, and the movable core 32-2 moves in a direction away from the traction coil 32-1 under external force, i.e., the movable core 32-2 moves toward the direction closer to the locking hole 41 and is inserted into the locking holes 41 to be locked again.

In the present embodiment, the wheels 4 are locked and unlocked directly by the traction electromagnet 32 without additionally providing a structure for assisting locking and unlocking on a ground apparatus for variable gauge, and thus the structure of the ground apparatus for variable gauge is simplified and becomes relatively simple and more reliable. Wheels 4 is pushed or pulled by the electric cylinder 11 of the lateral drive mechanism 1 to achieve the lateral movement of the wheels 4, so that the lateral movement of the wheels 4 is more stable, the wear between the wheels and the axles may be decreased, and the reliability of the gauge-changing wheelset is improved.

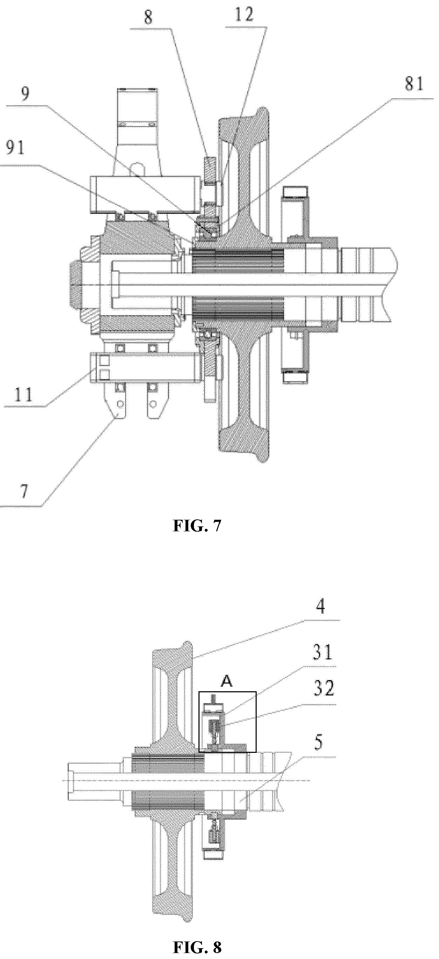

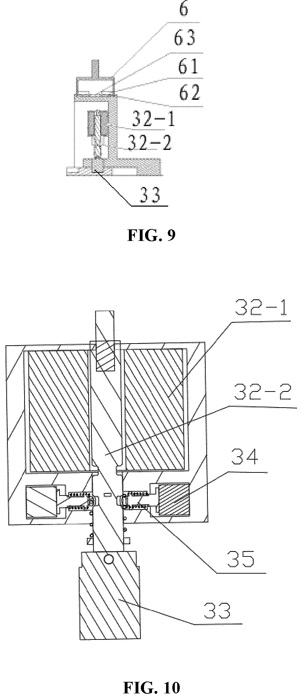

In an embodiment of the present invention, as shown in FIGS. 8 and 9, the locking mechanism 3 further includes a sleeve 31 and locking pins 33. The sleeve 31 transmits a lateral force of each wheel 4 through an interference fit with the axle 5.

Specifically, the sleeve 31 includes a first sleeve and a second sleeve connected with the first sleeve; the first sleeve includes a first end cover and a first barrel extending toward the wheel 4 in a circumferential direction of the first end cover; and the first end cover is provided with an axial through hole, and is tightly fixed around the axle 5 through the axial through hole. In other words, the first end cover is in an interference fit with the axle 5. The second sleeve includes a second end cover integrally connected with the first cylinder in the circumferential direction of the first cylinder and a second barrel extending toward the side of each wheel 4 in a circumferential direction of the second end cover.

The inner hub of each wheel 4 extends into the first barrel, the first cylinder is provided with a through hole for the movable core 32-2 to pass through. One locking hole 41 on the inner hubs of each wheel 4 is opposite to a through hole. When the wheels 4 move laterally, the inner hub of the wheels 4 moves relative to the first barrel until another locking hole 41 corresponds to the position of the through hole. Of course, it can be understood that, "one locking hole 41" and "the other locking hole 41" correspond to a gauge.

In order to facilitate the installation and fixation of the traction coil 32-1, the traction electromagnet 32 further includes a case fixed on an inner side wall of the second end cover, and the traction coil 32-1 is arranged in the case; one end of the movable core 32-2 passes through the traction coil 32-1, the other end of the movable core 32-2 is fixedly connected to the locking pin 33, and the locking pin 33 may be fixedly connected to the end of the movable core 32-2 by connecting parts such as bolts and screws; through the movable core 32-2, the locking pin 33 is driven to pass through the through hole into the locking hole 41 corresponding to the gauge such that the wheels 4 are locked, while through the movable core 32-2, the locking pins 33 are driven to exit out of the locking holes 41 such that the wheels 4 are unlocked, in this way, it is easily to lock or unlock the wheels, reliability for locking and unlocking can be improved and it is convenient to operate.

In an embodiment of the present invention, as shown in FIG. 5, in order to improve reliability, the inner hub of each wheel 4 is provided with a plurality of rows of the locking holes 41 in the circumferential direction, and each row of the locking holes 41 includes a plurality of the locking holes 41 arranged at intervals in the axial direction, and the distance between two adjacent locking holes 41 is equal to a half of the track gauge to be changed. When the gauge is changed, the wheels 4 at both ends of the axle 5 move simultaneously, the two wheels 4 each move a half of the gauge to be changed, that is, the total moving distance of the two wheels is the gauge to be changed, for example, changing from a standard gauge to a narrow gauge or wide gauge; or from a narrow gauge or wide gauge to a standard gauge, which may be selected according to specific needs.

In order to improve the reliability of the movable core 32-2 in the locked state and the unlocked state, as shown in FIG. 10, the traction electromagnet 32 further includes chuck coils respectively arranged on opposite sides of the movable core 32-2 34, and a lock pin 35 fits with each of the chuck coils 34. Two annular lock grooves are provided on the movable core 32-2 at intervals in an axial direction thereof, and one of the two annular lock grooves is opposite to the lock pin 35. The lock pin 35 is inserted into one of the annular lock grooves to fix the movable core 32-2 in the unlocking position or the locking position. That is, when the movable core 32-2 is inserted into the through hole and the locking hole 41, the lock pin 35 is inserted into the corresponding annular lock groove to fix the movable core 32-2 in the locking position to improve the reliability of the locking. After the movable core 32-2 exits from the corresponding locking hole 41, the lock pin 35 is inserted into the corresponding annular lock groove to fix the movable core 32-2 in the unlocking position, which improves the unlocking reliability and avoids the fault operation of the movable core 32-2.

In an embodiment of the present invention, the lock pin 35 is T-shaped, and a cavity for accommodating an end of the lock pin 35 is provided at a position where the chuck coil 34 is installed on the lock pin 35 and a gap in which the lock pin 35 moves in the axial direction is provided in the cavity. An end of the lock pin 35 outside the cavity is provided with an annular lug boss, the lock pin 35 is connected with a first spring having one end abutting against the annular lug boss and other end abutting against the outer side of the cavity. When the chuck coil 34 is powered on, the lock pin 35 is attracted by a magnetic force of the chuck coil 34 to overcome an elastic force of the first spring, and moves in the direction away from the movable core 32-2 until it exits from the movable core 32-2. At this time, the movable core 32-2 may perform an unlocking operation or locking operation. When the unlocking operation or locking operation is completed, the chuck coil 34 is powered off, the lock pin 35 is re-inserted into the corresponding annular lock groove under the restoring force of the first spring, and the movable core 32-2 is positioned in the unlocked or locked state.

A second spring is disposed on one end of the movable core 32-2 outside the case, one end of the second spring abuts against the outside of the case, and the other end of the second spring abuts against an annular flange at the end of the movable core 32-2. The movable core 32-2 is quickly reset after the traction coil 32-1 is powered off through the second spring. During changing gauge, the operating process of the traction electromagnet 32 is as follows: first, the chuck coil 34 is powered on, and the lock pin 35 is attracted to overcome the spring force such that the lock pin 35 extends out of the annular lock groove of the movable core 32-2. The lock pin 35 extends into the annular groove of the movable core 32-2 by 3mm, that is, the attraction surface of the lock pin 35 is 3mm away from the chuck. A miniature chuck may be used due to a relatively large magnetic force in the air gap of 3mm. Then, the traction coil 32-1 is powered on, and the movable core 32-2 drives the locking pin 33 to move out of the locking hole 41, and each wheel 4 is unlocked. Furthermore, before each wheel 4 moves laterally, the chuck coil 34 is powered off first, and the lock pin 35 is clipped in the annular lock groove at the lower end of the movable core 32-2 to keep the movable core 32-2 in the unlocking position of each wheel 4, and then the traction coil 32-1 is powered off, which may prevent the coil from being burned due to being powered on for a long time. Finally, after changing gauge for the wheels 4 is completed, the chuck coil 34 is powered on, the movable core 32-2 is unlocked, moves downward under a restoring force of the second spring, and drives the locking pin 33 to move down to the locking hole 41 on the hub of wheel 4, each wheel 4 is locked again. The chuck coil 34 is powered off, and the movable core 32-2 is clipped by the locking pin 35 to prevent that it drives the locking pin 33 to move radially under the centrifugal force and thus each wheel 4 is unlocked.

Since the operating voltage of the AC electromagnet is generally AC 220V, the temperature rises during operation. When the movable core 32-2 is clipped, the electromagnet is easily burned out due to excessive current and has a short service life. DC electromagnet generally adopts 24V DC voltage, and generally will not be burnt out because of the clipping of the movable core 32-2. They are small in size and have a long service life. However, the DC electromagnet needs smaller starting power than the AC electromagnet. Because the starting power required is not large here, DC power supply is adopted.

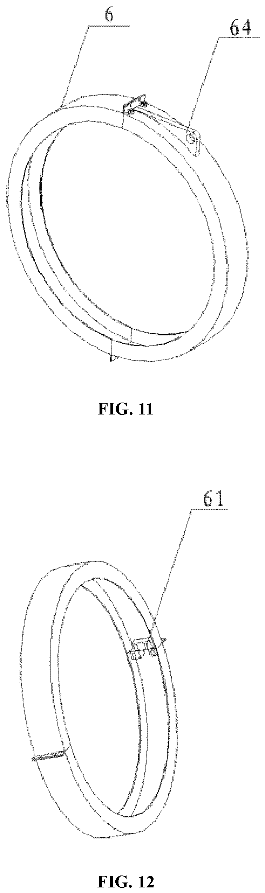

In an embodiment of the present invention, as shown in FIGS. 11 and 12, the gauge-changing wheelset further includes a dust cover 6 connected with the outer periphery of the second barrel, and the dust cover 6 includes an annular cover body and a retaining ring provided at both ends of the annular cover body. A plurality of electric brushes 61 are provided inside the cover body, a pair of annular mounting grooves surrounding the outer circumference of the second barrel are provided at intervals in the axial direction of the second barrel, and the inner circumferences of the retaining rings are respectively mounted in the annular installation groove. In specific use, the dust cover 6 is fixed and the second barrel rotates with the wheels 4. Chips 62 corresponding to the electric brushes 61 one by one are provided at outer circumference of the second barrel and between a pair of annular mounting grooves. In order to prevent the loop current on each wheel 4 and the axle 5 from being transmitted to the chips 62, which will cause electrical operating of the coil while it is not required, insulating rubber 63 is wrapped around each chip 62, only the side matching with the electric brush 61 is exposed, that is, the chips 62 are mounted on the insulating rubber 63, and the adjacent chips 62 are separated by the insulating rubber 63 so as to prevent short circuits. The traction coil 32-1 and the chuck coil 34 are respectively electrically connected to the corresponding chip 62, the second barrel rotates relative to the dust cover 6 so that the chips 62 and the electric brushes 61 rub to form electric connection so as to supply power to the traction coil 32-1 and the chuck coil 34. In order to facilitate the installation of the dust cover 6, the dust cover 6 is configured to be made up of two parts, and two electric brushes 61 are provided on each part.

In an embodiment of the present invention, the electric brush 61 includes two pairs of electric brushes, the chips 62 includes two pairs of chips, the traction coil 32-1 is electrically connected to one pair of the chips 62, and the chuck coil 34 is electrically connected to the other pair of chips 62.

The two pairs of electric brushes 61 are respectively connected to a power supply unit, and the power supply unit is connected to a control mechanism configured to control the power supply unit to supply power to the traction coil 32-1 and/or the chuck coil 34. The control mechanism may be a control mechanism of the train itself.

The gauge change process has five steps, i.e., unloading, unlocking, laterally moving, locking, and loading the wheels 4. Here, the gauge changing from a standard gauge of 1435mm to a wide gauge of 1520mm is taken as an example to illustrate the gauge change process of the active gauge change solution.

In the first step, the wheels 4 are unloaded: when the train runs from the gauge of 1435mm to a gauge changing section, the speed is decreased to 15m/s, and then as the train advances, the support track gradually rises, and after the support track is in contact with the axle box body 7 and runs for a short distance, the standard steel track disappears, and the wheels 4 is completely unloaded.

In the second step, each wheel 4 is unlocked: an apparatus installed in the ground support rail sends a signal indicating the wheels 4 are unloaded. The control mechanism supplies power to the locking mechanism 3, and in the traction electromagnet 32, the chuck coil 34 and the traction coil 32-1 are powered on in sequence, the movable core 32-2 is unlocked and drives locking pin 33 to be retracted, and the wheels 4 are unlocked. When the traction electromagnet 32 detects that the movable core 32-2 is in the retracted position, a signal indicating the wheels 4 are unlocked is sent out, and the control mechanism de-energizes the suction coil 34 and the traction coil 32-1 in turn to prevent the coil from being burnt when it is powered on for a long time. At this time, the movable core 32-2 is clipped in the unlocking position of each wheel 4 by the lock pin 35.

In the third step, the gauge is changed: after the control mechanism receives the signal indicating the wheels 4 are unlocked, it de-energizes the suction coil 34 and the traction coil 32-1 in turn while energizes the planetary roller screw electric cylinder (having an energizing direction opposite to a previous energizing direction, that is, energizing in the reverse direction last time, and energizing in the forward direction this time). The electric cylinder 11 pushes/pulls the movable disk 8 to make the wheels 4 reach a new gauge position.

In the fourth step, the wheels 4 are locked: after the electric cylinder 11 reaches the gauge position, a signal indicating the gauge change is completed is sent out, and then the chuck coil 34 of the traction electromagnet 32 is powered on, and the movable core 32-2 is unlocked and the locking pin 33 is driven to extend out by the spring restoring force. When a detection device detects that the movable core 32-2 is in the extended-out position, a signal indicating the wheels 4 are locked is sent out, the chuck coil 34 is powered off, and the lock pin 35 locks the movable core 32-2 and the locking pin 33 at a locking position of the wheels 4 to prevent it from moving under centrifugal force.

In the fifth step, wheels 4 are loaded: the steel rail for the gauge of 1520mm appears, the support track gradually drops, and the wheels 4 is reloaded; the entire gauge change process finished.

From the embodiments above, the gauge-changing wheelset according to the present invention has a simple structure, it may be fastened to the wheel, and occupies a small space on the wheel. Based on the bearing, the movable disk remains stationary when the wheel rotates; the overall transmission torque is large and reliability is improved.

The movable disk is pushed or pulled by the lateral drive mechanism to drive the wheels for lateral movement, which can stabilize the lateral movement of the wheels, decrease the wear between the wheel axles, and improve the reliability of changing gauge. Further, a ground apparatus for variable gauge becomes relative simple, and the reliability of variable-track-gauge action and variable-track-gauge efficiency can be improved since signals for variable gauge are output by a vehicle control system.

The embodiments above are only the preferred embodiments of the present application, and are not intended to limit the application.

## Claims

1. A gauge-changing wheelset comprising a wheel (4) and a movable disk assembly, the movable disk assembly comprising:

   a movable disk (8) having a central through hole; and
   a bearing having an outer ring fastened in the central through hole and an inner ring fixed around an outer hub of the wheel (4); **characterized in that** the movable disk (8) is having connecting holes (82) located outside of the central through hole, wherein the connecting holes (82) connect with a lateral drive mechanism (1) for moving the wheel (4);
   wherein each connecting hole (82) has a rubber node therein, the lateral drive mechanism (1) comprises an electric cylinder (11) having an extension end provided with a positioning lug boss and an external thread; the extension end penetrates through the rubber node and the positioning lug boss abuts against an end surface of the connecting hole (82), and a nut (12) is screwed on the external thread to be abutted against another end surface of the connecting hole (82),
   wherein the movable disk (8) has two symmetrical connecting holes (82) with respect to the central through hole.

2. The gauge-changing wheelset of claim 1, **characterized in that** the movable disk (8) is in a similar rhombus shape, and top corners of the similar rhombus shape are constructed as arcs that are transitionally connected to adjacent sides, and the two connecting holes (82) are respectively disposed at a pair of opposite top corners on the movable disk (8).

3. The gauge-changing wheelset of any one of claims 1 to 2, **characterized in that** the bearing is a four-point angular contact ball bearing (9).

4. The gauge-changing wheelset of claim 3, **characterized in that** the movable disk (8) has a movable disk retaining ring (81) on a side close to the wheel; and
   the movable disk (8) has a bearing outer retaining ring (92) and a bearing inner retaining ring (91) on a side far distal to the wheel.

5. The gauge-changing wheelset of claim 4, **characterized in that** the movable disk retaining ring (81) and the bearing outer retaining ring (92) are both connected to the movable disk (8) by a bolt (10) and a nut; and
   the bearing inner retaining ring (91) is fixed on the outer hub of the wheel (4) by a screw (43).

6. The gauge-changing wheelset of claim 5, **characterized in that** a gap is disposed between the bearing inner retaining ring (91) and the bearing outer retaining ring (92).

7. The gauge-changing wheelset of claim 1, **characterized in that** the rubber node has a thickness less than or equal to an axial length of the connecting hole (82) in which the rubber node is located.

## Patentansprüche

1. Spurwechsel-Radsatz, aufweisend ein Rad (4) und eine bewegliche Scheibenanordnung, wobei die bewegliche Scheibenanordnung aufweist:

eine bewegliche Scheibe (8) mit einem zentralen Durchgangsloch; und

ein Lager mit einem Außenring, der in dem zentralen Durchgangsloch befestigt ist, und einem Innenring, der um eine äußere Nabe des Rads (4) befestigt ist;

**dadurch gekennzeichnet, dass** die bewegliche Scheibe (8) Verbindungslöcher (82) hat, die außerhalb des zentralen Durchgangslochs angeordnet sind, wobei die Verbindungslöcher (82) mit einem seitlichen Antriebsmechanismus (1) zum Bewegen des Rads (4) verbunden sind; wobei jedes Verbindungsloch (82) einen Gummiknoten darin hat, wobei der seitliche Antriebsmechanismus (1) einen elektrischen Zylinder (11) aufweist, der ein Verlängerungsende hat, das mit einer Positionierungsansatznabe und einem Außengewinde versehen ist; wobei das Verlängerungsende den Gummiknoten durchdringt und die Positionierungsansatznabe an einer Endfläche des Verbindungslochs (82) anliegt, und eine Mutter (12) auf das Außengewinde geschraubt ist, um an einer anderen Endfläche des Verbindungslochs (82) anzuliegen, wobei die bewegliche Scheibe (8) zwei symmetrische Verbindungslöcher (82) in Bezug auf das zentrale Durchgangsloch hat.

2. Der Spurwechsel-Radsatz nach Anspruch 1, **dadurch gekennzeichnet, dass** die bewegliche Scheibe (8) eine ähnliche Rhombusform hat, und obere Ecken der ähnlichen Rhombusform als Bögen konstruiert sind, die übergangsweise mit benachbarten Seiten verbunden sind, und die zwei Verbindungslöcher (82) jeweils an einem Paar gegenüberliegender oberer Ecken auf der beweglichen Scheibe (8) angeordnet sind.

3. Der Spurwechsel-Radsatz nach einem der Ansprüche 1 bis 2, **dadurch gekennzeichnet, dass** das Lager ein Vierpunkt-Schrägkugellager (9) ist.

4. Der Spurwechsel-Radsatz nach Anspruch 3, **dadurch gekennzeichnet, dass** die bewegliche Scheibe (8) einen beweglichen Scheibenhaltering (81) auf einer Seite nahe dem Rad hat; und die bewegliche Scheibe (8) einen äußeren Lagerhaltering (92) und einen inneren Lagerhaltering (91) auf einer Seite weit entfernt von dem Rad hat.

5. Der Spurwechsel-Radsatz nach Anspruch 4, **dadurch gekennzeichnet, dass** der bewegliche Scheibenhaltering (81) und der äußere Lagerhaltering (92) beide mit der beweglichen Scheibe (8) durch einen Bolzen (10) und eine Mutter verbunden sind; und der innere Lagerhaltering (91) an der äußeren Nabe des Rads (4) durch eine Schraube (43) befestigt ist.

6. Der Spurwechsel-Radsatz nach Anspruch 5, **dadurch gekennzeichnet, dass** ein Spalt zwischen dem inneren Lagerhaltering (91) und dem äußeren Lagerhaltering (92) angeordnet ist.

7. Der Spurwechsel-Radsatz nach Anspruch 1, **dadurch gekennzeichnet, dass** der Gummiknoten eine Dicke hat, die kleiner oder gleich einer axialen Länge des Verbindungslochs (82) ist, in dem der Gummiknoten angeordnet ist.

## Revendications

1. Un jeu de roues à changement de calibre comprenant une roue (4) et un ensemble de disque mobile, l'ensemble de disque mobile comprenant :

   - un disque mobile (8) ayant un trou traversant central ; et
   - un roulement ayant une bague extérieure fixée dans le trou traversant central et une bague intérieure fixée autour d'un moyeu extérieur de la roue (4) ; **caractérisé en ce que** le disque mobile (8) comporte des trous de connexion (82) situés à l'extérieur du trou central traversant, dans lequel les trous de connexion (82) se connectent avec un mécanisme d'entraînement latéral (1) pour déplacer la roue (4) ; dans lequel chaque trou de connexion (82) comporte un nœud en caoutchouc, le mécanisme d'entraînement latéral (1) comporte un cylindre électrique (11) ayant une extrémité d'extension pourvue d'un bossage de positionnement et d'un filetage externe ; l'extrémité d'extension pénètre à travers le nœud en caoutchouc et le bossage de positionnement vient en butée contre une surface d'extrémité du trou de connexions (82), et un écrou (12) est vissé sur le filetage externe pour être en butée contre une autre surface d'extrémité du trou de connexion (82), dans lequel le disque mobile (8) a deux trous de connexion symétriques (82) par rapport au trou traversant central.

2. Le jeu de roues à changement de calibre de la revendication 1, **caractérisé en ce que** le disque mobile (8) est d'une forme similaire à un losange, et des coins supérieures de la forme similaire à un losange sont construits en tant qu'arcs qui sont connectés qui sont connectés de manière transitoire à des côtés adjacents, et les deux trous de connexion (82) sont respectivement disposés au niveau d'une paire de coins supérieurs opposés sur le disque mobile (8).

3. Le jeu de roues à changement de calibre selon l'une quelconque des revendications 1 à 2, **caractérisé en ce que** le roulement est un roulement à bille à contact oblique à 4 points (9).

4. Le jeu de roues à changement de calibre de la revendication 3, **caractérisé en ce que** le disque mobile (8) a une bague de retenue de disque mobile (81) sur un côté près de la roue ; et le disque mobile (8) a une bague de retenue extérieure de roulement (92) et une bague de retenue intérieure de roulement (91) sur un côté très distal par rapport à la roue.

5. Le jeu de roues à changement de calibre de la revendication 4, **caractérisé en ce que** la bague de retenue de disque mobile (81) et la bague de retenue extérieure de roulement (92) sont toutes deux connectées au disque mobile (8) par un boulon (10) et un écrou ; et la bague de retenue intérieure de roulement (91) est fixée sur le moyeu extérieur de la roue (4) par une vis (43).

6. Le jeu de roues à changement de calibre de la revendication 5, **caractérisé en ce qu'**un écart est disposé entre la bague de retenue intérieure de roulement (91) et la bague de retenue extérieure de roulement (92).

7. Le jeu de roues à changement de calibre de la revendication 1, **caractérisé en ce que** le nœud de caoutchouc a une épaisseur inférieure ou égale à une longueur axiale du trou de connexion (82) dans lequel le nœud de caoutchouc est situé.

91

92

8   82

**FIG. 1**

81

**FIG. 2**

**FIG. 3**

**FIG. 4**

**FIG. 5**

**FIG. 6**

**FIG. 7**

**FIG. 8**

**FIG. 9**

**FIG. 10**

**FIG. 11**

**FIG. 12**

**EP 3 988 421 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 107697094 A